## Europäisches Patentamt

(19) **European Patent Office**

**Office européen des brevets**

(11) Veröffentlichungsnummer: **0 180 253**

**B1**

(12) # EUROPÄISCHE PATENTSCHRIFT

(45) Veröffentlichungstag der Patentschrift:
02.11.88

(51) Int. Cl.⁴: **B 60 S 3/04**

(21) Anmeldenummer: **85201236.8**

(22) Anmeldetag: **26.07.85**

(54) **Verfahren zur Hydrophobierung von Kraftfahrzeugen in Waschanlagen und Mittel zur Durchführung des Verfahrens.**

(30) Priorität: **27.10.84 DE 3439440**

(43) Veröffentlichungstag der Anmeldung:
**07.05.86 Patentblatt 86/19**

(45) Bekanntmachung des Hinweises auf die Patenterteilung:
**02.11.88 Patentblatt 88/44**

(84) Benannte Vertragsstaaten:
**AT BE DE FR NL SE**

(56) Entgegenhaltungen:
**DE-A-1 816 392**
**DE-A-2 540 873**
**DE-A-2 806 980**
**DE-C-3 032 220**
**FR-A-2 075 517**

**PATENT ABSTRACTS OF JAPAN, Band 7, Nr. 287 (M-264) 1432 , 21. Dezember 1983; & JP - A - 58 161 644 (TAKEUCHI TETSUKOU) 26.09.1983**
**PATENT ABSTRACTS OF JAPAN, Band 5, Nr. 128 (C-67) 800 , 18. August 1981; & JP - A - 56 62861 (NIPPON HOUSE HOORUDO) 29.05.1981**

(73) Patentinhaber: **RÜTGERSWERKE AKTIENGESELLSCHAFT, Mainzer Landstrasse 217, D-6000 Frankfurt am Main 1 (DE)**

(72) Erfinder: **Meister, Jürgen, Dr., Memelstrasse 17, D-4053 Jüchen 7 (DE)**
Erfinder: **Pressler, Manfred, Dietrich-Bonhoeferstrasse 71, D-4156 Willich 1 (DE)**
Erfinder: **Menzel, Horst, Dr., Am Lohbach 17, D-4134 Rheinberg (DE)**

LIBER, STOCKHOLM 1988

## Beschreibung

Die Erfindung betrifft ein Verfahren zur dauerhaften Hydrophobierung von Fahrzeugen sowie dazu notwendige neue Autohydrophobierungsmittel. Derartige, flüssige Mittel werden in Autowaschanlagen in geringen Mengen dem Wasser des letzten Spülvorgangs zugesetzt, und sie bewirken, daß der Wasserfilm auf der Lackoberfläche reißt und das Wasser leicht und möglichst vollständig abtropft.

Übliche Autohydrophobierungsmittel, wie sie z. B. aus DE-A-3 032 220 bekannt sind, enthalten kationische Tenside, meist quartäre Ammoniumverbindungen, Imidazolinderivate und ggf. Wachsemulsionen, um einen Hydrophobierungseffekt zu erzielen.

Dieser Hydrophobierungseffekt ist zeitlich relativ eng begrenzt und bei vielen Kraftfahrzeughaltern besteht der Wunsch nach einer länger andauernden und höherwertigen Hydrophobierung der Lacke.

Aus JP-A-58 161 644 ist ein Verfahren zum Reinigen von Lastkraftwagen und Sonderfahrzeugen bekannt, bei dem auf die gereinigte Lackoberfläche ein Wachsschaum aufgebracht wird. Auch diese Hydrophobierung hält nur relativ kurze Zeit und überdies ist das Verfahren nicht zur Hydrophobierung in Waschanlagen geeignet.

Es bestand daher die Aufgabe, ein Verfahren und Mittel zu entwickeln, die, in einer Autowaschanlage eingesetzt, einen Hydrophobierungseffekt erzielen, der gegenüber dem bisher dort erreichten Effekt eine wesentlich verbesserte Haltbarkeit zeigt.

Die Lösung der Aufgabe besteht in Verfahren und Mittel zur Durchführung des Verfahrens gemäß der Ansprüche 1 bis 5.

Mittel, die eine wesentlich verbesserte Haltbarkeit des Hydrophobierungseffektes auf der Lackoberfläche bedingen, sind aus DE-A-1 816 392 aus dem Bereich der Autopolituren bekannt. Ihre verbesserte Haltbarkeit ist durch die Verwendung von aminofunktionellen Polysiloxanen bedingt. Die aminofunktionellen Polysiloxane, die in Wasser unlöslich sind, werden in derartigen Polituren in Formulierungen eingesetzt, die Kohlenwasserstoffe als Lösemittel enthalten. Diese Formulierungen sind gegenüber Detergentien unempfindlich und mit Wasser nicht verträglich und nicht verschäumbar. In einer Autowaschanlage aber muß die Hydrophobierung aus einem wäßrigen Medium erfolgen.

Aminofunktionelle Polysiloxane können durch Zusatz von starken organischen Säuren wasserverträglich gemacht werden. Es zeigte sich, daß entsprechende saure wäßrige Lösungen von Aminofunktionellen Polysiloxanen mit üblichen Detergentien verträglich sind und daß sie auf einer Lackoberfläche, ebenfalls eine langzeitige Hydrophobierung bewirken.

Es wurde ferner gefunden, daß die Qualität des sich auf der Lackoberfläche ausbildenden Filmes von der Vernetzung des Polysiloxans auf dem Lack abhängt und damit von der Kontaktzeit.

Bei Autopolituren ist dazu ausreichend Zeit, nicht aber bei einen üblichen Durchlauf durch eine Waschanlage, bei dem das Hydrophobierungsmittel sofort das Aufreißen des Wasserfilms und damit das möglichst vollständige Ablaufen des wäßrigen Mediums von der Lackoberfläche bewirkt.

Die Lösung dieses Teilproblems erfolgt dadurch, daß das Hydrophobierungsmittel als Schaum auf die gereinigte Lackoberfläche aufgebracht wird. Dieser Schaum wird in einem handelsüblichen Schaumaggregat hergestellt und flächendeckend auf die Lackoberfläche aufgebracht. Nach einer gewissen Einwirkungszeit wird der Schaum in einem zusätzlichen Klarspülgang mit Wasser abgespült. Die Einwirkungszeit sollte möglichst mehrere Minuten betragen, um eine optimale Vernetzung zu bewirken. Andererseits aber würde dadurch der Ablauf in der Waschanlage gestört werden, bzw. die Bandlänge müßte wesentlich vergrößert werden. Daher wird aus diesen Überlegungen die Einwirkungszeit des Schaumes auf 20 bis 60 s beschränkt und der Schaum danach abgespült.

Dem Klarspülwasser kann zusätzlich ein schaumzerstörendes Mittel, wie etwa geringe Mengen eines Kohlenwasserstoffes, eines Diacetals oder höheren Alkohols zugesetzt werden.

Nach dem Abspülvorgang zeigt sich spontan ein hervorragender Hydrophobierungseffekt, der sich durch Wasserperlen mit besonders großem Randwinkel auszeichnet. Dieser Abperleffekt bleibt auch bei Fahrten im Regen mehrere Wochen lang erhalten.

Die eingesetzten Hydrophobierungsmittel haben die folgende Zusammensetzung:

| | |
|---|---|
| 5 bis 20 Gew.-% | kationisches Tensid |
| 0,5 bis 10 Gew.-% | Emulgator |
| 1 bis 5 Gew.-% | Schaumbildner |
| 5 bis 40 Gew.-% | Glykol |
| 0,5 bis 5 Gew.-% | aminofunktionelles Polysiloxan |
| 3 bis 10 Gew.-% | organische Säure |
| Rest | Wasser |

Als kationisches Tensid, Emulgator oder Glykol eignen sich alle Produkte, die in bislang gebräuchlichen Autohydrophobierungsmittel eingesetzt werden.

Bevorzugte Beispiele für verwendete kationische Tenside sind Imidazolinderivate und/oder quatäre Ammoniumverbindungen des Typs

FIG00/45

wobei
$>$r $R_1$ und $R_2$ $C_8$ - $C_{20}$ Alkyl oder Alenyl, $R_3$ und $R_4$ $C_1$ - $C_4$ bedeutet.

Bevorzugt ist der Alkenylrest ($R_1$ und $R_2$), der dem natürlichen Talgfett entspricht bzw. der Stearylrest. Als $R_3$ und $R_4$ sind Methylgruppen bevorzugt. Als Anionen kommen Chlorid, Bromid, Jodid, Phosphat, Acetat oder Methosulfat in Frage.

Emulgatoren für das wasserunlösliche Alkylacetal sind Fettaminalkoxylate oder aromatische Alkoxylate.

Als Glykol kann jedes der technisch wichtigen Glykole eingesetzt werden. Beispiele sind Ethylenglykol, Propyl-, Butyl -, Diethylen-, Triethylen- oder Dipropylglykol

Schaumbildner sind Tenside, die außer der Grenzflächenaktivität noch ein Filmbildungsvermögen besitzen. So können durchaus auch die Emulgatoren als Schaumbildner wirken. Um aber eine verbesserte Wirkung zu erzielen, empfiehlt sich der Zusatz zumindest eines weiteren Schaumbildners. Typische Schaumbildner in wäßrigen Lösungen sind Seifen, Paraffinkettenamine oder Saponine.

Als aminofunktionelles Polysiloxan wird ein handelsübliches organisches Polysiloxan mit einer oder mehreren Aminogruppen der funktionellen Gruppen eingesetzt. Derartige Produkte werden z. B. unter der Bezeichnung Baysilone OF 4061 von Bayer oder DC 536 von Dow Corning vertrieben.

Die verwendbaren organischen Säuren sind flüssige oder feste, ein- oder mehrwertige Carbonsäuren, die sich in Wasser lösen und deren Säurestärke so groß ist, daß sie mit Aminen leicht unter Salzbildung reagieren. Bevorzugte Säuren sind Essig- , Malon- , Wein- oder Zitronensäure.

Die folgende allgemeine Rezeptur für ein erfindungsgemäß verwendbares Hydrophobierungsmittel zeigt die bevorzugte Auswahl der Komponenten aus den verschiedenen Gruppen:

| | |
|---|---|
| 10 - 20 Gew.-% | Ditalgdimethylammoniumchlorid |
| 1 - 10 Gew.-% | Oleylaminethoxylat (2 Mol EO) |
| 1 - 5 Gew.-% | n-Talgfett-1,3-diaminopropan |
| 5 - 40 Gew.-% | Butylglykol |
| 0,5 - 5 Gew.-% | aminofunktionelles Polysiloxan |
| 3 - 10 Gew.-% | Essigsäure |
| Rest | Wasser |

Diese Mittel sind stabile wäßrige Lösungen, die aber vor Gebrauch mit Wasser je nach Konzentration 100-bis 300-fach verdünnt werden. In dieser Verdünnung wird aus diesem Mittel mit üblichen Schaumaggregaten ein Schaum erzeugt, der in einer Autowaschanlage auf die gereinigte Lackoberfläche eines Kraftfahrzeugs gebracht und nach einer Einwirkungszeit von bevorzugt 20 - 60 s mit Wasser abgespült wird. Danach reißt der Wasserfilm auf, das Wasser perlt ab und das Fahrzeug wird in üblicher Weise trockengeblasen.

**Patentansprüche** für die Vertragsstaaten: BE, DE, FR, NL, SE

1. Verfahren zur Hydrophobierung von Kraftfahrzeugen in Waschanlagen durch Aufbringen eines Hydrophobierungsmittels auf die gereinigte Lackoberfläche, <u>dadurch gekennzeichnet</u>, daß ein Hydrophobierungsmittel eingesetzt wird, das neben üblicherweise verwendeten kationischen Tensiden, Emulgatoren und Glykol, Schaumbildner, organische Säure und aminofunktionelles Polysiloxan enthält, wobei das Hydrophobierungsmittel flächendeckend als Schaum aufgebracht wird und der Schaum nach einer ausreichenden Einwirkungszeit in einem anschließenden Klarspülung mit Wasser abgespült wird.

2. Verfahren nach Anspruch 1, <u>dadurch gekennzeichnet</u>, daß dem im Klarspülgang verwendeten Wasser ein schaumzerstörendes Mittel zugesetzt wird.

3. Verfahren nach Anspruch 1, <u>dadurch gekennzeichnet</u>, daß der aufgebrachte Schaum nach einer Einwirkungszeit von 20 - 60 s abgespült wird.

4. Mittel zur Hydrophobierung gemäß Anspruch 1 der folgenden Zusammensetzung:

0 180 253

| | |
|---|---|
| 5 bis 20 Gew.-% | kationisches Tensid |
| 0,5 bis 10 Gew.-% | Emulgator |
| 1 bis 5 Gew.-% | Schaumbildner |
| 5 bis 40 Gew.-% | Glykol |
| 0,5 bis 5 Gew.-% | aminofunktionelles Polysiloxan |
| 3 bis 10 Gew.-% | organische Säure |
| Rest | Wasser |

5. Mittel gemäß Anspruch 4 der folgenden Zusammensetzung:

| | |
|---|---|
| 10 - 20 Gew.-% | Ditalgdimethylammoniumchlorid |
| 1 - 10 Gew.-% | Oleylaminethoxylat (2 Mol EO) |
| 1 - 5 Gew.-% | n-Talgfett-1,3-diaminopropan |
| 5 - 40 Gew.-% | Butylglykol |
| 0,5 - 5 Gew.-% | aminofunktionelles Polysiloxan |
| 3 - 10 Gew.-% | Essigsäure |
| Rest | Wasser |

**Patentansprüche** für den Vertragsstaat AT

1. Verfahren zur Hydrophobierung von Kraftfahrzeugen in Waschanlagen durch Aufbringen eines Hydrophobierungsmittels auf die gereinigte Lackoberfläche, dadurch gekennzeichnet, daß ein Hydrophobierungsmittel eingesetzt wird, das neben üblicherweise verwendeten kationischen Tensiden, Emulgatoren und Glykol, Schaumbildner, organische Säure und aminofunktionelles Polysiloxan enthält, wobei das Hydrophobierungsmittel flächendeckend als Schaum aufgebracht wird und der Schaum nach einer ausreichenden Einwirkungszeit in einem anschließenden Klarspülung mit Wasser abgespült wird.

2. Verfahren nach Anspruch 1, dadurch gekennzeichnet, daß dem im Klarspülgang verwendeten Wasser ein Schaumzerstörendes Mittel zugesetzt wird.

3. Verfahren nach Anspruch 1, dadurch gekennzeichnet, daß der aufgebrachte Schaum nach einer Einwirkungszeit von 20 - 60 s abgespült wird.

4. Verfahren nach Anspruch 1 bis 3, dadurch gekennzeichnet, daß ein Hydrophobierungsmittel der folgenden Zusammensetzung:

| | |
|---|---|
| 5 bis 20 Gew.-% | kationisches Tensid |
| 0,5 bis 10 Gew.-% | Emulgator |
| 1 bis 5 Gew.-% | Schaumbildner |
| 5 bis 40 Gew.-% | Glykol |
| 0,5 bis 5 Gew.-% | aminofunktionelles Polysiloxan |
| 3 bis 10 Gew.-% | organische Säure |
| Rest | Wasser |

eingesetzt wird.

5. Verfahren nach Anspruch 4, dadurch gekennzeichnet, daß ein Hydrophobierungsmittel der folgenden Zusammensetzung:

| | |
|---|---|
| 10 - 20 Gew.-% | Ditalgdimethylammoniumchlorid |
| 1 - 10 Gew.-% | Oleylaminethoxylat (2 Mol EO) |
| 1 - 5 Gew.-% | n-Talgfett-1,3-diaminopropan |
| 5 - 40 Gew.-% | Butylglykol |
| 0,5 - 5 Gew.-% | aminofunktionelles Polysiloxan |
| 3 - 10 Gew.-% | Essigsäure |
| Rest | Wasser |

eingesetzt wird.

**Claims** for the contracting states: BE, DE, FR, NL, SE

1. A process for hydrophobing motor cars in car washing devices by applying a hydrophobing agent on the cleaned lacquer surface characterised by the use of a hydrophobing agent that contains frother, organic acid and amino functional polysiloxane besides conventionally used cationic surfactants, emulsifying agents and

4

glycole, wherein the hydrophobing agent is applied as foam on the whole surface and the foam is rinsed with water in a following flashing step after it has been allowed to act on for a sufficient time.

2. A process according to claim 1, wherein a foam disturbing agent is added to the water used in the flashing step.

3. A process according to claim 1, wherein the applied foam is rinsed after acting time from 20 to 60 s.

4. Hydrophobing agent according to claim 1 having the following composition:

5 to 20 % by weight of a cationic surfactant
0,5 to 10 % by weight of an emulsifying agent
1 to 5 % by weight of a frother
5 to 40 % by weight of glycole
0,5 to 5 % by weight of amino functional polysiloxane
3 to 10 % by weight of an organic acid
and water added to 100 % by weight.

5. Hydrophobing agent according to claim 4 having the following composition:

10 to 20 % by weight of di-tallow-dimethyl ammonium chloride
1 to 10 % by weight of oleylamine ethoxylate (2 mols EO)
1 to 5 % by weight of n-tallow oil-1,3-diaminopropane
5 to 40 % by weight of butyl glycole
0,5 to 5 % by weight of aminofunctional polysiloxane
3 to 10 % by weight of acetic acid
water added to 100 % by weight.

**Claims** for the contracting state AT

1. A process for hydrophobing motor cars in car washing devices by applying a hydrophobing agent on the cleaned lacquer surface characterised by the use of a hydrophobing agent that contains frother, organic acid and amino functional polysiloxane besides conventionally used cationic surfactants, emulsifying agents and glycole, wherein the hydrophobing agent is applied as foam on the whole surface and the foam is rinsed with water in a following flashing step after it has been allowed to act on for a sufficient time.

2. A process according to claim 1, wherein a foam disturbing agent is added to the water used in the flashing step.

3. A process according to claim 1, wherein the applied foam is rinsed after acting time from 20 to 60 s.

4. A process according to claims 1 to 3, wherin a hydrophobing agent is used having the following composition:

5 to 20 % by weight of a cationic surfactant
0,5 to 10 % by weight of an emulsifying agent
1 to 5 % by weight of a frother
5 to 40 % by weight of glycole
0,5 to 5 % by weight of amino functional polysiloxane
3 to 10 % by weight of an organic acid
and water added to 100 % by weight.

5. A process according to claim 4, wherein a hydrophobing agent is used having the following composition:

10 to 20 % by weight of di-tallow-dimethyl ammonium chloride
1 to 10 % by weight of oleylamine ethoxylate (2 mols EO)
1 to 5 % by weight of n-tallow oil-1,3-diaminopropane
5 to 40 % by weight of butyl glycole
0,5 to 5 % by weight of aminofunctional polysiloxane
3 to 10 % by weight of acetic acid
water added to 100 % by weight

**Revendications** pour les Etats contractants BE, DE, FR, NL, SE

1. Procédé pour l'imperméabilisation de véhicules automobiles dans des stations de lavage par dépôt d'un agent hydrophobant sur la surface de peinture nettoyée, caractérisé en ce que l'on met en oeuvre, à côté d'agents tensioactifs cationiques couramment utilisés, des agents émulsionnants et un glycol, des agents moussants, un acide organique et un polysiloxane à fonction amino, l'agent hydrophobant étant déposé sous forme de mousse recouvrant la surface et la mousse étant enlevée par rinçage après un temps d'action suffisant, dans une opération de rinçage subséquente à l'eau claire.

2. Procédé selon la revendication 1, caractérisé en ce que l'on ajoute un agent antimousse à l'eau utilisée pendant l'opération de rinçage à l'eau claire.

3. Procédé selon la revendication 1, caractérisé en ce que l'on enlève par rinçage la mousse déposée, après un temps d'action de 20 - 60 s.

4. Agent hydrophobant selon la revendication 1 constitué par:

5 à 20 % en poids d'agent tensioactif cationique
0,5 à 10 % en poids d'agent émulsionnant
1 à 5 % en poids d'agent moussant
5 à 40 % en poids de glycol
0,5 à 5 % en poids de polysiloxane à fonction amino
3 à 10 % en poids d'acide organique,

le reste étant constitué par de l'eau.

5. Agent selon la revendication 4, constitué par:

10 à 20 % en pôids de chlorure de di(suif)diméthylammonium
1 à 10 % en poids d'éthoxylate d'oléylamine (2 moles d'OE)
1 à 5 % en poids de n(suif)-1,3-diamino-propane
5 à 40 % en poids de butylglycol
0,5 à 5 % en poids de polysiloxane à fonction amino
3 à 10 % en poids d'acide acétique,

le reste étant constitué par de l'eau.

**Revendications** pour l'Etat Contractant AT

1. Procédé pour l'imperméabilisation de véhicules automobiles dans des stations de lavage par dépôt d'un agent hydrophobant sur la surface de peinture nettoyée, caractérisé en ce que l'on met en oeuvre, à côté d'agents tensioactifs cationiques couramment utilisés, des agents émulsionnants et un glycol, des agents moussants, un acide organique et un polysiloxane à fonction amino, l'agent hydrophobant étant déposé sous forme de mousse recouvrant la surface et la mousse étant enlevée par rinçage après un temps d'action suffisant, dans une opération de rinçage subséquente à l'eau claire.

2. Procédé selon la revendication 1, caractérisé en ce que l'on ajoute un agent antimousse à l'eau utilisée pendant l'opération de rinçage à l'eau claire.

3. Procédé selon la revendication 1, caractérisé en ce que l'on enlève par rinçage la mousse déposée, après un temps d'action de 20 - 60 s.

4. Procédé selon les revendications 1 à 3, caractérisé en ce que l'on met en oeuvre un agent hydrophobant constitué par

5 à 20 % en poids d'agent tensioactif cationique
0,5 à 10 % en poids d'agent émulsionnant
1 à 5 % en poids d'agent moussant
5 à 40 % en poids de glycol
0,5 à 5 % en poids de polysiloxane à fonction amino
3 à 10 % en poids d'acide organique,

le reste étant constitué par de l'eau.

5. Procédé selon la revendication 4, caractérisé en ce quel'on met en oeuvre un agent hydrophobant constitué par:

10 à 20 % en pôids de chlorure de di(suif)diméthylammonium
1 à 10 % en poids d'éthoxylate d'oléylamine (2 moles d'OE)
1 à 5 % en poids de n(suif)-1,3-diamino-propane
5 à 40 % en poids de butylglycol
0,5 à 5% en poids de polysiloxane à fonction amino
3 à 10% en poids d'acide acétique,

le reste étant constitué par de l'eau.